# EUROPEAN PATENT SPECIFICATION

(11) **EP 2 321 375 B1**
(45) Date of publication and mention of the grant of the patent: **09.07.2014**
(21) Application number: 09805370.5
(22) Date of filing: 29.07.2009
(51) Int. Cl.: C09K 3/18, C08J 7/04

(54) **ACICULAR SILICA COATING FOR ENHANCED HYDROPHILICITY/TRANSMITTIVITY**
NADELFÖRMIGE SILICIUMBESCHICHTUNG FÜR ERHÖHTE HYDROPHILIE/TRANSMISSIVITÄT
REVÊTEMENT DE SILICE ACICULAIRE POUR UN CARACTÈRE HYDROPHILE/UNE TRANSMISSIVITÉ AMÉLIORÉS

(30) Priority: 07.08.2008 US 187977
(43) Date of publication of application: 18.05.2011
(73) Proprietor: 3M Innovative Properties Company, Saint Paul, MN 55133-3427 (US)
(72) Inventor: JING, Naiyong, Saint Paul, MN 55133-3427 (US); ZHU, Peiwang, Saint Paul, Minnesota 55133 - 3427 (US)
(74) Representative: Vossius & Partner
(86) International application number: PCT/US2009/052043
(87) International publication number: WO 2010/017069

(56) References cited:
- EP-A1- 1 787 966
- WO-A1-00/71360
- US-A- 5 221 497
- US-A- 5 221 497
- US-A- 5 597 512
- US-A- 5 922 299
- US-A- 5 989 515
- US-A- 5 997 621
- US-A1- 2005 233 135
- US-A1- 2005 233 135
- US-A1- 2006 003 116
- US-A1- 2006 204 655
- US-A1- 2007 086 091
- US-A1- 2008 057 187
- US-A1- 2008 124 539
- US-B2- 6 918 957
- H.M. SHANG ET AL.: 'Optically Transparent Superhydrophobic Silica-Based Films.' THIN SOLID FILMS vol. 472, no. 1-2, 24 January 2005, pages 37 - 43, XP002566348

## Description

### Field of the invention

The present invention relates to acicular silica particle coatings. In addition the present invention provides articles such as optical films, bearing acicular silica coatings thereon, and to processes for preparing such articles.

### Background

Articles having surfaces capable of spreading water, and thus inhibiting the formation of water droplets on the surface of the article, are desirable for a variety of uses. For example, it may be desirable for transparent plastics used in misty or humid environments, such as windows of greenhouses, to avoid the formation of light-reflecting water droplets which reduce light transmission. A water-spreading surface on these materials may help maintain their transparency and minimizes undesirable streaking.

A problem with water-spreading surface coatings, especially silica-based coatings, is the highly complex nature of the surface chemistry, reaction chemistry and solution chemistry of colloidal silica and colloidal silica films. For example, the interaction of ions with the silica surface is not fully understood despite extensive study (See Iler, "The Chemistry of Silica," John Wiley, 1979 p. 665.) Despite such difficulties, a silica-based water-spreading film that has enhanced durability is provided in accordance with the invention described below.

Water-spreading characteristics may be desirable on traffic signs that employ retroreflective sheeting. Retroreflective sheeting has the ability to return substantial quantities of incident light back towards the light source. Such light transmission into and back from a retroreflective sheeting is impaired by clinging raindrops and/or dew.

A particular form of precipitation that can affect light transmission is dew formation. Dew can be particularly problematic because it occurs predominantly at nighttime when the retroreflective sheeting is operative. When present on a traffic sign in the form of small beaded water droplets, dew can disrupt the path of incident and retroreflective light. This can make information on the sign more difficult for passing motorists to discern. In contrast, when the dew is spread out smoothly as a transparent layer over the surface of the retroreflective traffic sign, the information on the sign can be easier to discern because the resulting thin smooth layer of water does not significantly misdirect the path of incident and retroreflective light.

### Summary

The present disclosure is directed to a coating composition comprising a dispersion containing acicular silica particles, and a method for coating a substrate with the coating composition as defined in the claims.

The present disclosure further provides a coated article comprising a substrate, particularly a polymeric substrate, having an acicular silica particle coating thereon. The coating comprises a continuous coating of agglomerated acicular silica particles which have an average particle diameter of 9-25 nm with a length of 40-500 nm. In many embodiments the coating is substantially uniform in thickness and is durably adhered to the substrate.

The coating adheres very well to a variety of substrates, particularly polymeric substrates, and can provide such substrates with excellent average reduction in specular reflectance, e.g., at least two percent. When the substrate is transparent, the coating can provide an average increase in transmissivity of normal incident light in the wavelength range of 400 to 700 nm over the transmission through an uncoated substrate of the same material. The increase in transmission is preferably at least two percent and up to as much as ten percent or more. For any chosen wavelength of light, there will be an optimal thickness for a coating used as an antireflection layer.

The coating may further provide a hydrophilic surface to the substrate and is particularly useful in providing a hydrophilic surface to hydrophobic polymer substrates. The coating may also provide antifogging properties, and antistatic properties to polymeric film and sheet materials subject to static build-up. The coating may also preferably provide abrasion resistance and slip properties to polymeric materials, such as film and sheet materials, thereby improving their handleability.

Coatings that result from the coating compositions may further provide a water-resistant and mechanically durable hydrophilic surface to a surface, such as glass and polymer substrates, and good antifogging properties under a variety of temperature and high humidity conditions. Furthermore, the coatings may provide protective layers and exhibit rinse-away removal of organic contaminates including food and machine oils, paints, dust and dirt, as the nanoporous structure of the coatings tends to resist penetration by oligomeric and polymeric molecules.

The method of the invention does not require non-aqueous solvent or surfactants for coating on substrates, and therefore is less hazardous and adds no volatile organic compounds (VOCs) to the air. Other advantages of many embodiments include more uniform coatings, better adhesion to substrates, better durability of the coating, higher antireflection and increased transmissivity, and provide an easy to clean surface where contaminant may be rinsed away.

### BRIEF DESCRIPTION OF THE FIGURES

FIG. 1 is a TEM micrograph of Comparative Example C-5.
Fig. 2 is a TEM micrograph of Example 14.
Fig 3 is plotted transmittivity data for Examples C1, 18 and 20-22.
Fig. 4 is plotted transmittivity data for Examples C1, 19, 27 and 28.
Fig. 5 is plotted transmittivity data for Examples C1, 18 and 28-33.
Fig. 6 is plotted transmittivity data for Examples C1-C4, 1 and 5-13
Fig. 7 is plotted transmittivity data for Examples C17, 56 and 57
Fig 8 is plotted transmittivity data for Examples C18, 58 and 59.

### Detailed Description

The present disclosure provides a method for coating a substrate comprising coating a substrate with a coating composition having a pH of less than 3 comprising an acid having a pKa (H₂O) of < 5, preferably < 2.5, most preferably less than 1, and an aqueous dispersion having a pH of less than 5 of acicular silica particles preferably having an average particle diameter of 9-25 nm with a length of 40-500 nm, and drying the coating, wherein the coating composition does not contain non-aqueous solvents.

Unexpectedly, these acicular silica particle coating compositions, when acidified, could be coated directly onto hydrophobic organic and inorganic substrates without either organic solvents or surfactants. The wetting property of these inorganic particle aqueous dispersions on hydrophobic surfaces such as polyethylene terephthalate (PET) or polycarbonate (PC) is a function of the pH of the dispersions and the pKa of the acid. The coating compositions are coatable on hydrophobic organic substrates when they are acidified with HCl to pH=2 to 3, and even to 5 in some embodiments. In contrast, the coating compositions bead up on the organic substrates at neutral or basic pH.

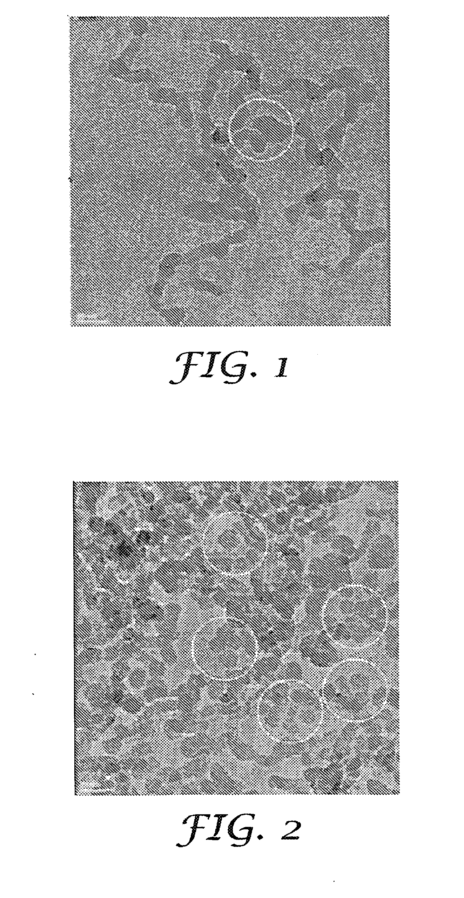

Not wishing to be bound by theory, it is believed that the agglomerates of the acicular silica particles are formed by through acid-catalyzed siloxane bonding in combination with protonated silanol groups at the particle surfaces and these agglomerates explain the coatability on hydrophobic organic surfaces, as these groups tend to be bonded, adsorbed, or otherwise durably attached to hydrophobic surfaces. The term agglomerated refers to multiple bonding between the silica particles which have many points of contact with one or another. An example may be seen in Fig. 2 (TEM micrograph obtained at pH=2). As result of the necking, bonding or entanglements of the silica particles, the original acicular shape may be deformed. Transmission electron microscopy generally reveals that at least 25%, preferably at least 50% of the acicular silica particles in the resultant coatings are bonded to adjacent particles.

Although aqueous organic solvent-based coatings of nanoparticle silica dispersions have been described, such mixtures of water and an organic solvents may suffer from differential evaporation rates that result in continuously changing composition of the liquid phase, which consequently changes the coating properties; resulting in poor uniformity and defects. Although surfactants may help the wetting property of dispersions, they may interfere with interparticular and interfacial substrate adhesion, and often produce non-uniform and defect-containing coatings.

Light-scattering measurements on these acidified dispersions indicate that these acicular silica particles do tend to agglomerate, providing (after coating and drying) three-dimensional porous networks of acicular silica particles where each acicular particle appears to be firmly bonded to adjacent acicular particles. Electron micrographs reveal such bonds as silica "necks" between adjacent particles which are created by the acid in the absence of silica sources such as tetraalkoxysilanes or siloxane oligomers. Their formation is attributed to the catalytic action of strong acid in making and breaking siloxane bonds. Surprisingly, the acidified dispersions appear to be stable when the pH is in the range 1 to 4. Light-scattering measurements showed that these agglomerated, acidified acicular silica particles at pH ∼ 2 to 3 and at 10 wt.% concentration retained the same size after more than a week or even more than a month, although deformation in the shape is noted. Such acidified acicular silica particle dispersions would be expected to remain stable even much longer at lower dispersion concentrations.

The silica particles used in this composition are dispersions of acicular silica particles in an aqueous or in an aqueous organic solvent mixture and having an average particle diameter of 9-25 nm with a length of 40-500 nm. The term "acicular" refers to the general needle-like, elongated shape of the particles and may include other sting-like, rod-like, chain-like shapes, as well as filamentary shapes. It will be understood that the initial acicular shaped may be deformed by contact with the acid of the coating composition and the resulting necking or bonding. The average particle size may be determined using transmission electron microscopy. The acicular silica particles are preferably not surface modified.

The acicular colloidal silica particles may have a uniform thickness of 5 to 25 nm, a length, D₁, of 40 to 500 nm (as measured by dynamic light-scattering method) and a degree of elongation D₁/D₂ of 5 to 30, wherein D₂ means a diameter in nm calculated by the equation D₂ =2720/S and S means specific surface area in m² /g of the particle, as is disclosed in the specification of U.S. 5,221,497, incorporated herein by reference.

U.S. 5,221,497 discloses a method for producing acicular silica nanoparticles by adding water-soluble calcium salt, magnesium salt or mixtures thereof to an aqueous colloidal solution of active silicic acid or acidic silica sol having a mean particle diameter of 3 to 30 nm in an amount of 0.15 to 1.00 wt. % based on CaO, MgO or both to silica, then adding an alkali metal hydroxide so that the molar ratio of SiO₂ /M₂O (M: alkali metal atom) becomes 20 to 300, and heating the obtained liquid at 60 to 300°C for 0.5 to 40 hours. The colloidal silica particles obtained by this method are elongate-shaped silica particles that have elongations of a uniform thickness within the range of 5 to 40 nm extending in only one plane.

The acicular silica sol may also be prepared as described in U.S. 5,597,512. Briefly stated, the method comprises: (a) mixing an aqueous solution containing a water-soluble calcium salt or magnesium salt or a mixture of said calcium salt and said magnesium salt with an aqueous colloidal liquid of an active silicic acid containing from 1 to 6% (w/w) of SiO₂ and having a pH in the range of from 2 to 5 in an amount of 1500 to 8500 ppm as a weight ratio of CaO or MgO or a mixture of CaO and MgO to SiO₂ of the active silicic acid; (b) mixing an alkali metal hydroxide or a water-soluble organic base or a water-soluble silicate of said alkali metal hydroxide or said water-soluble organic base with the aqueous solution obtained in step (a) in a molar ratio of SiO₂/M₂O of from 20 to 200, where SiO₂ represents the total silica content derived from the active silicic acid and the silica content of the silicate and M represents an alkali metal atom or organic base molecule; and (c) heating at least a part of the mixture obtained in step (b) to 60°C or higher to obtain a heel solution, and preparing a feed solution by using another part of the mixture obtained in step (b) or a mixture prepared separately in accordance with step (b), and adding said feed solution to said heel solution while vaporizing water from the mixture during the adding step until the concentration of SiO₂ is from 6 to 30% (w/w). The silica sol produced in step (c) typically has a pH of from 8.5 to 11.

Useful acicular silica particles may be obtained as an aqueous suspension under the trade name SNOWTEX-UP by Nissan Chemical Industries (Tokyo, Japan). The mixture consists of 20-21 % (w/w) of acicular silica, less than 0.35% (w/w) of Na₂O, and water. The particles are about 9 to 15 nanometers in diameter and have lengths of 40 to 300 nanometers. The suspension has a viscosity of <100 mPas at 25°C, a pH of about 9 to 10.5, and a specific gravity of about 1.13 at 20°C.

Other useful acicular silica particles may be obtained as an aqueous suspension under the trade name SNOWTEX-PS-S and SNOWTEX-PS-M by Nissan Chemical Industries, having a morphology of a string of pearls..The mixture consists of 20-21 % (w/w) of silica, less than 0.2% (w/w) of Na₂O, and water. The SNOWTEX-PS-M particles are about 18 to 25 nanometers in diameter and have lengths of 80 to 150 nanometers. The particle size is 80 to 150 by dynamic light scattering methods. The suspension has a viscosity of <100 mPas at 25°C, a pH of about 9 to 10.5, and a specific gravity of about 1.13 at 20°C. The SNOWTEX-PS-S has a particle diameter of 10-15 nm and a length of 80-120 nm.

Low- or non-aqueous silica sols (also called silica organosols) may also be used and are silica sol dispersions wherein the liquid phase is an organic solvent, or an aqueous organic solvent. In the practice of this invention, the silica sol is chosen so that its liquid phase is compatible with the intended substrate, and is typically aqueous or an aqueous organic solvent. Ammonium stabilized acicular silica particles may generally be diluted and acidified in any order.

If desired, spherical silica particles may be added, in amounts which do not reduce to the transmissivity values and/or antifog properties. These additional silica particles generally have an average primary particle size of 100 nanometers or less, preferably 5 to 100 nanometers, most preferably 5 to 50 nanometers, and may be used in amounts up to the equivalent weight of the acicular silica particles, i.e. the ratio of acicular particles to spherical nanoparticles is ≥1:1. The term "spherical" refers to the nominal shape of the silica nanoparticles.

In some embodiments, the acicular silica particles may be surface-modified using a surface modifying agent. A surface-modified silica particle includes surface groups attached to the surface of the particle. The surface groups modify the hydrophobic or hydrophilic nature of the particle, but are preferably hydrophilic. The surface groups may be selected to provide a statistically averaged, randomly surface-modified particle. In some embodiments, the surface groups are present in an amount sufficient to form a monolayer, preferably a continuous monolayer, on the surface of the particle. Generally, less than 25% of the available surface functional groups (i.e. Si-OH groups) are modified with a hydrophilic surface-modifying agent to retain hydrophilicity and dispersibility, and are modified with a hydrophilic surface-modifying agent. It is preferred that the silica nanoparticles are not surface modified, although they may be acid- or base-stabilized.

A variety of methods are available for modifying the surface of nanoparticles including, e.g., adding a surface modifying agent to nanoparticles (e.g., in the form of a powder or a colloidal dispersion) and allowing the surface modifying agent to react with the nanoparticles. Other useful surface modification processes are described in, e.g., U.S. Pat. No. 2,801,185 (Iler) and U.S. Pat. No. 4,522,958 (Das et al.).

Surface modifying groups may be derived from surface modifying agents. Schematically, surface modifying agents can be represented by the formula A-B, where the A group is capable of attaching to the surface of the particle (i.e. the Si-OH groups) and the B group is a compatibilizing group that does not react with other components in the system (e.g., the adhesive and/or the substrate). Compatibilizing groups can be selected to render the particle relatively more polar, relatively less polar or relatively non-polar. Preferably the compatibilizing group is a non-basic hydrophilic group such as an acid group (including carboxylate, sulfonate and phosphonate groups), ammonium group or poly(oxyethylene) group. Suitable classes of surface-modifying agents include, e.g., silanes, organic acids, organic bases and alcohols.

Such surface modifying agents are used in amounts of 0 to 10 wt.% relative to the amount of acicular silica particles. The surface modifying agents may be used to modify the surfaces of the silica particles prior to incorporation into the coating composition, but may be advantageously added directly to the coating composition to modify the silica surfaces *in situ.*

The coating composition contains an acid having a pKa (H₂O) of < 5, preferably less than 2.5, most preferably less than 1. Useful acids include both organic and inorganic acids and may be exemplified by oxalic acid, citric acid, benzoic acid, acetic acid, benzenesulfonic acid, H₂SO₃, H₃PO₄, CF₃CO₂H, HCl, HBr, HI, HBrO₃, HNO₃, HClO₄, H₂SO₄, CH₃SO₃H, CF₃SO₃H, CF₃CO₂H, and CH₃OSO₂OH. Most preferred acids include HCl, HNO₃, H₂SO₄, and H₃PO₄. In some embodiments, it is desirable to provide a mixture of an organic and inorganic acid. In some embodiments one may use a mixture of acids comprising those having a pKa ≤ 3.5 (preferably < 2.5, most preferably less than 1) and minor amounts of other acids having pKa's > 0. It has been found that weaker acids having a pKa of ≥5 do not provide a uniform coatings having the desirable properties which may include transmissivity, cleanability and/or durability. In particular, coating compositions with weaker acids, or basic coating compositions, typically bead up on the surface of a polymeric substrate.

The coating composition generally contains sufficient acid to provide a pH of less than 5, preferably less than 4, most preferably less than 3. In some embodiments, it has been found that the pH of the coating composition can be adjusted to pH 5-6 after reducing the pH to less than 5. This allows one to coat more pH sensitive substrates.

Tetraalkoxy coupling agents, such as tetraethylorthosilicate (TEOS) and oligomeric forms, such as alkyl polysilicates (e.g. poly(diethoxysiloxane)), may also be useful to improve binding between acicular silica particles. The amount of coupling agent included in the coating composition should be limited in order to prevent destruction of the anti-reflective or anti-fog properties of the coating. The optimal amount of coupling agent is determined experimentally and is dependent on the coupling agent's identity, molecular weight and refractive index. The coupling agent(s), when present, are typically added to the composition at levels of 0.1 to 20 percent by weight of the acicular silica particle concentration, and more preferably about 1 to 15 percent by weight of the acicular silica particles.

The article of the disclosure is a substrate bearing a continuous network of acicular silica particles agglomerates. As used herein, the term "continuous" refers to covering the surface of the substrate with virtually no discontinuities or gaps in the areas where the gelled network is applied. The term "network" refers to an aggregation or agglomeration of acicular silica particles linked together to form a porous three-dimensional network.

Figure 1 shows a coating at a basic pH from Comparative Example C5. The coating is non-uniform and the individual particles reveal few links or necks to the adjacent particles. Figure 2 shows a coated article from Example 14. As can be seen, the individual acicular silica particles are linked to adjacent acicular silica particles, and the coating is uniform.

The term "porous" refers to the presence of voids between the acicular silica particles created when the particles form a continuous coating. For single layer coatings, it is known that in order to maximize light transmission in air through an optically transparent substrate, and minimize reflection by the substrate, the refractive index of the coating should equal as closely as possible the square root of the refractive index of the substrate and the thickness of the coating should be one-fourth (1/4) of the optical wavelength of the incident light. The voids in the coating provide a multiplicity of subwavelength interstices between the acicular silica particles where the index of refraction (RI) abruptly changes from that of air (RI =1) to that of the metal oxide particles (e.g., for silica RI =1.44). By adjusting the porosity, a coating having a calculated index of refraction (as shown in U.S. Pat. No. 4,816,333 (Lange, et al.) incorporated herein by reference) very close to the square root of the refractive index of the substrate can be created. By utilizing coatings having optimal indices of refraction, at coating thicknesses equal to approximately one-fourth the optical wavelength of the incident light, the percent transmission of light through the coated substrate is maximized and reflection is minimized.

Preferably, the network has a porosity of about 25 to 65 volume percent, more preferably about 30 to 50 volume percent, when dried. In some embodiments the porosity may be higher. Porosity may be calculated from the refractive index of the coating according to published procedures such as in W. L. Bragg, A. B. Pippard, Acta Crystallographica, volume 6, page 865 (1953) incorporated herein by reference. With acicular silica particles, this porosity provides a coating having an index of refraction of 1.15 to 1.40, preferably 1.20 to 1.36, which is approximately equal to the square root of the refractive indices of polyester, polycarbonate, or poly(methyl methacrylate) substrates. For example, a porous acicular silica particle coating having a refractive index of 1.25 to 1.36 is capable of providing a highly anti-reflective surface when coated on a polyethylene terephthalate substrate (RI =1.64) at a thickness of 1000-2000 Å. Coating layer thicknesses may be higher, as high as a few microns or mils thick, depending on the application, such as for easy-clean of removal of undesired particulates, rather than antireflection. The mechanical properties may be expected to be improved when the coating thickness is increased.

The coating composition may optionally contain a polymeric binder to improve scratch resistance and/or adhesion of the coating composition to the substrate. Useful polymeric binders are preferably water soluble or water dispersible and include polymers comprised of ethylenically unsaturated monomer(s), such as polyvinyl alcohol, poly-N-vinylpyrrolidone, polyvinyl acetate, polyacrylates and methacrylates and polyurethanes; polyesters; natural polymers such as starch, gelatin, gums, celluloses, dextran, proteins and the like; and derivatives (ionic and non-ionic) and copolymers based on any of the polymers listed above. Furthermore, polymers comprising alkoxysilane functionalities, including polysiloxanes may also be useful. Generally, the amount of binder should be such that the majority of the acicular particles are exposed, rather than embedded in the polymer matrix. The coating composition can contain up to about 50 weight percent of the polymeric binder based on the weight of the silica particles. Preferably, the amounts of polymeric binder are in the range of about 0.05 to 10 weight percent by weight to improve scratch resistance and coating adhesion. Undesirable excess binder may be removed by rinsing or steeping the coated article in water.

In some embodiments, articles of the invention comprise a substrate which may be of virtually any construction, transparent to opaque, polymeric, glass, ceramic, or metal, having a flat, curved, or complex shape and having formed thereon a continuous network of agglomerated acicular silica particles. When the coating is applied to transparent substrates to achieve increased light transmissivity, the coated article preferably exhibits a total average increase in transmissivity of normal incident light of at least two percent and up to as much as ten percent or more, depending on the substrate coated, over a range of wavelengths extending at least between 400 to 700 nm. An increase in transmissivity may also be seen at wavelengths into the ultraviolet and/or infrared portion of the spectrum. Coating compositions applied to one side or both sides of a light transmissive planar substrate to increase the percent transmission of the substrate by at least 5 percent, and preferably by 10 percent, when measured at 550 nm.

The coating compositions of the present invention provide hydrophilicity to a substrate, useful in imparting anti-fog properties, in addition to anti-reflection, to substrates coated therewith. Coatings are considered anti-fogging if a coated substrate resists the formation of small, condensed water droplets in sufficient density to significantly reduce the transparency of the coated substrate such that it cannot be adequately seen through after exposure to repeated human breath directly on the article and/or after holding the article above a source of steam. A coating composition may still be regarded as anti-fogging even though a uniform water film or a small number of large water droplets forms on the coated substrate so long as the transparency of the coated substrate is not significantly reduced such that it cannot be readily seen through. In many instances, a film of water that does not significantly reduce the transparency of the substrate will remain after the substrate has been exposed to a steam source.

There are numerous instances where the value of optically clear articles would be enhanced if the tendency of the articles to cause light scattering or glare or to be obscured by the formation of a fog on a surface of the article could be reduced. For example, protective eyewear (goggles, face shields, helmets, etc.), ophthalmic lenses, architectural glazings, decorative glass frames, motor vehicle windows and windshields may all scatter light in a manner that causes an annoying and disruptive glare. Use of such articles may also be detrimentally affected by the formation of a moisture vapor fog on a surface of the article. Ideally, in preferred embodiments, the coated articles of this invention have exceptional anti-fog properties while also separately having greater than 90 percent transmission of 550 nm light.

The polymeric substrates may comprise polymeric sheet, film, or molded material. In some embodiments, where increased transmissivity is desired, the substrate is transparent. The term transparent means transmitting at least 85% of incident light in the visible spectrum (about 400-700 nm wavelength). Transparent substrates may be colored or colorless.

In other embodiments, where increased hydrophilicity is desired, the substrate may be initially hydrophobic. The compositions may be applied to a wide variety of substrates by a variety of coating methods. As used herein, "hydrophilic" is used only to refer to the surface characteristics of the thermoplastic polymer layer, i.e., that it is wet by aqueous solutions, and does not express whether or not the layer absorbs aqueous solutions. Accordingly, a thermoplastic polymer layer may be referred to as hydrophilic whether or not the layer is impermeable or permeable to aqueous solutions. Surfaces on which drops of water or aqueous solutions exhibit a static water contact angle of less than 50° are referred to as "hydrophilic". Hydrophobic substrates have a water contact angle of 50° or greater. Coatings described herein may increase the hydrophilicity of a substrate at least 10 degrees, preferably at least 20 degrees.

Substrates to which the coating compositions of the invention can be applied are preferably transparent or translucent to visible light. Preferred substrates are made of polyester (e.g., polyethylene terephthalate, polybutyleneterephthalate), polycarbonate, allyldiglycolcarbonate, polyacrylates, such as polymethylmethacrylate, polystyrene, polysulfone, polyethersulfone, homo-epoxy polymers, epoxy addition polymers with polydiamines, polydithiols, polyethylene copolymers, fluorinated surfaces, cellulose esters such as acetate and butyrate, glass, ceramic, organic and inorganic composite surfaces and the like, including blends and laminates thereof.

Typically the substrate is in the form of a film, sheet, panel or pane of material and may be a part of an article such as ophthalmic lenses, architectural glazings, decorative glass frames, motor vehicle windows and windshields, and protective eye wear, such as surgical masks and face shields. The coatings may, optionally if desired, cover only a portion of the article, e.g., only the section immediately adjacent the eyes in a face shield may be coated. The substrate may be flat, curved or shaped. The article to be coated may be produced by blowing, casting, pultrusion, extrusion, or injection molding, also by photopolymerization, compression molding or reactive injection molding.

Articles such as disposable surgical face masks and face shields which are coated with the anti-reflective, anti-fog compositions of this invention are preferably stored in single use packages which reduce environmental exposure and contamination which can result in decreased anti-fog properties. Reusable articles are preferably used in combination with a package that protects or completely seals the product from environmental exposure when not in use. The material used to form the packages should be comprised of a non-contaminating material. It has been found that certain adjacent materials can result in partial or total elimination of the anti-fog properties. While not being bound by any theory, it is currently believed that materials which contain plasticizers, catalysts, and other low molecular weight materials which can volatilize on aging are sorbed into the coating and result in a decrease in the anti-fog property. Accordingly, the invention provides protective eyewear, such as surgical masks and face shields, as well as ophthalmic lenses, windows and windshields which have anti-reflective and anti-fog properties.

In other embodiments, the substrate need not be transparent. It has been found that the composition provides easily cleanable surfaces to substrates such as flexible films used in graphics and signage. Flexible films may be made from polyesters such as PET or polyolefins such as PP (polypropylene), PE (polyethylene) and PVC (polyvinyl chloride) are particularly preferred. The substrate can be formed into a film using conventional filmmaking techniques such as extrusion of the substrate resin to produce a film and optional uniaxial or biaxial orientation of the extruded film. The substrate can be treated to improve adhesion between the substrate and the coating, using, e.g., chemical treatment, mechanical roughening, corona treatment such as air or nitrogen corona, plasma, flame, or actinic radiation. If desired, an optional tie layer can also be applied between the substrate and the coating to increase the interlayer adhesion. The other side of the substrate may also be treated using the above-described treatments to improve adhesion between the substrate and an adhesive. The substrate may be provided with graphics, such as words or symbols as known in the art.

In some embodiments the coating composition provides improved cleanability and provides a tough, abrasion resistant layer that protects the substrate and the underlying graphic display from damage from causes such as scratches, abrasion and solvents. By "cleanable" it is meant the coating composition, when cured, provides oil and soil resistance to help prevent the coated article from being soiled by exposure to contaminants such as oils or adventitious dirt. The coating composition can also make the coating easier to clean if it is soiled, so only a simple rinse in water is required to remove contaminants.

In order to uniformly coat, or to enhance the interfacial adhesion, the composition onto a hydrophobic substrate from an aqueous system it may be desirable to increase the surface energy of the substrate and/or reduce the surface tension of the coating composition. The surface energy may be increased by oxidizing the substrate surface prior to coating using corona discharge or flame treatment methods. These methods may also improve adhesion of the coating to the substrate. Other methods capable of increasing the surface energy of the article include the use of primers such as thin coatings of polyvinylidene chloride (PVDC). Alternatively, the surface tension of the coating composition may be decreased by addition of lower alcohols (C₁ to C₈). In some embodiments, however, in order to improve the coating hydrophilicity for desired antifogging properties and to ensure uniform coating of the article from an aqueous or hydroalcoholic solution, it may be beneficial to add a wetting agent, which is typically a surfactant.

The term "surfactant" as used herein describes molecules comprising hydrophilic (polar) and hydrophobic (non-polar) regions on the same molecule which are capable of reducing the surface tension of the coating solution. Useful surfactants may include those disclosed in U.S. 6,040,053 (Scholz et al.), incorporated herein by reference.

For typical concentrations of acicular silica particles (e.g., about 0.2 to 15 percent by weight relative to the total coating composition) most surfactants comprise less than about 0.1 percent by weight of the coating composition, preferably between about 0.003 and 0.05 percent by weight, in order to preserve the anti-reflective properties of the coating. It should be noted that with some surfactants a spotty coating is attained at concentrations in excess of what is needed to achieve the anti-fog property.

Anionic surfactants in the coating composition are preferred when added to improve the uniformity of the resulting coatings. Useful anionic surfactants include, but are not limited to, those with molecular structures comprising (1) at least one hydrophobic moiety, such as from about C₆ - to about C₂₀ -alkyl, alkylaryl, and/or alkenyl groups, (2) at least one anionic group, such as sulfate, sulfonate, phosphate, polyoxyethylene sulfate, polyoxyethylene sulfonate, polyoxyethylene phosphate, and the like, and/or (3) the salts of such anionic groups, wherein said salts include alkali metal salts, ammonium salts, tertiary amino salts, and the like. Representative commercial examples of useful anionic surfactants include sodium lauryl sulfate, available under the trade name TEXAPON L-100 from Henkel Inc., Wilmington, Del., or under the trade name POLYSTEP B-3 from Stepan Chemical Co, Northfield, Ill.; sodium lauryl ether sulfate, available under the trade name POLYSTEP B-12 from Stepan Chemical Co., Northfield, Ill.; ammonium lauryl sulfate, available under the trade name STANDAPOL A from Henkel Inc., Wilmington, Del.; and sodium dodecyl benzene sulfonate, available under the trade name SIPONATE DS-10 from Rhone-Poulenc, Inc., Cranberry, N.J.

Examples of useful nonionic surfactants include polyethoxylated alkyl alcohols (e.g. "Brij™ 30," and "Brij™ 35," commercially available from ICI Americas, Inc., and "Tergitol™ TMN-6™ Specialty Surfactant," commercially available from Union Carbide Chemical and Plastics Co., polyethoxylated alkylphenols (e.g., "Triton™ X-100" from Union Carbide Chemical and Plastics Co., "Iconol™ NP-70" from BASF Corp.) and polyethylene glycol/polypropylene glycol block copolymer (commercially available as "Tetronic™ 1502 Block Copolymer Surfactant," "Tetronic™ 908 Block Copolymer Surfactant" and "Pluronic™ F38 Block Copolymer Surfactant," all from BASF, Corp.).

Certain cationic surfactants may be useful in the coating composition. Where the coating composition does not include surfactants or when improved coating uniformity is desirable, it may be beneficial to add a wetting agent including those that do not impart durable anti-fog properties, such as for example acetylenic diols, in order to ensure uniform coating of the article from an aqueous or aqueous alcoholic solution.

Any added wetting agent must be included at a level which will not destroy the anti-reflective or anti-fog properties of the coating. Generally the wetting agent is used in amounts of less than about 0.1 percent by weight of the coating composition, preferably between about 0.003 and 0.05 percent by weight of the coating composition depending on the amount of acicular silica particles. Rinsing or steeping the coated article in water may be desirable to remove excess surfactant or wetting agent.

The compositions are preferably coated on the article using conventional techniques, such as bar, roll, curtain, rotogravure, spray, or dip coating techniques. The preferred methods include bar and roll coating, or air knife coating to adjust thickness. In order to ensure uniform coating and wetting of the film, it may be desirable to oxidize the substrate surface prior to coating using corona discharge or flame treatment methods. Other methods capable of increasing the surface energy of the article include the use of primers such as polyvinylidene chloride (PVDC).

The coatings of the present invention are preferably applied in uniform average thicknesses varying by less than about 200 Å, and more preferably by less than 100 Å, in order to avoid visible interference color variations in the coating. The optimal average dry coating thickness is dependent upon the particular coating composition, but in general the average thickness of the coating is between 500 and 2500 Å, preferably 750 to 2000 Å, and more preferably 1000 to 1500 Å, as measured using an ellipsometer such as a Gaertner Scientific Corp Model No. L115C. Above and below this range, the anti-reflective properties of the coating may be significantly diminished. It should be noted, however, that while the average coating thickness is preferably uniform, the actual coating thickness can vary considerably from one particular point on the coating to another. Such variation in thickness, in confined in a visibly distinct region, may actually be beneficial by contributing to the broad band anti-reflective properties of the coating.

The coatings of the present invention may be coated on both sides of a planar substrate. Alternatively, the coatings of the present invention may be coated on one side of the substrate. The opposite side of the substrate may be uncoated, coated with a conventional surfactant or polymeric anti-fogging composition such as that disclosed in U.S. Pat. Nos. 2,803,552; 3,075,228; 3,819,522; 4,467,073; or 4,944,294 (all of which are incorporated herein by reference), or coated with an anti-reflective composition, such as that disclosed in U.S. Pat. No. 4,816,333, or the multiple layered coating described by J. D. Masso in "Evaluation of Scratch Resistant and Anti-reflective Coatings for Plastic Lenses," (supra), both of which are incorporated herein by reference. Preferably, the antifog coating surface should face the direction of higher humidity, e.g., on a face shield the side having the anti-fog coating should face the wearer. The opposite side may bear a transparent resilient and/or tough coating to resist abrasion by particles, and/or shattering from a blow.

Once coated, the article is typically dried at temperatures of between 20 and 150° C. in a recirculating oven. An inert gas may be circulated. The temperature may be increased further to speed the drying process, but care must be exercised to avoid damage to the substrate. After the coating composition is applied to the substrate and dried, the coating comprises preferably from about 80 to 99.9 percent by weight (more preferably from about 85 to 95 percent by weight) of acicular silica particles (typically agglomerated), from about 0.1 to 20 percent by weight (more preferably from about 5 to 15 percent by weight) hydrolyzed tetralkoxysilanes and optionally about 0 to 5 percent by weight (more preferably from about 0.5 to 2 percent by weight) surfactant, and up to about 5 percent by weight (preferably 0.1 to 2 percent by weight) wetting agent.

When the coating compositions of the invention are applied to substrates to provide anti-reflection properties, glare is reduced by increasing the light transmission of the coated substrate. Preferably, the coated substrate exhibits an increase in transmission of normal incident light of at least 3 percent and up to as much as 10 percent or more, when compared to an uncoated substrate, at 550 nm (e.g., the wavelength at which the human eye displays peak photo-optic response). The percent transmission is dependent upon the angle of incidence and the wavelength of light and is determined using ASTM test method D 1003-92, entitled "Haze and Luminous Transmittance of Transparent Plastics," incorporated herein by reference. Preferably, the coated substrates display an increase in percent transmission of greater than 3 percent, more preferably greater than 5 percent, and most preferably greater than 8 percent when compared with an uncoated substrate, using 550 nm light. When the desired usage involves significant "off-axis" (i.e. non-normal) viewing or unwanted reflections, gains in visibility may be greater especially where the reflections approach or exceed in brightness the object in view.

The coating compositions of the invention, as discussed hereinabove, provide anti-fog as well as anti-reflective properties to surfaces coated therewith. The anti-fog property is demonstrated by the tendency of the coatings to resist the formation of water droplets which tend to significantly reduce the transparency of the coated substrate. Water vapor from, for example, human breathing, tends to condense upon the coated substrate in the form of a thin uniform water film, rather than as water droplets. Such a uniform film does not significantly reduce the clarity or transparency of the substrate.

In many embodiments, the coating compositions of the present invention are shelf stable, e.g., they do not gel, opacify, or otherwise deteriorate significantly. Further, in many embodiments, the coated articles are durable and abrasion resistant, using the test method described herein.

### Examples

### Materials

Snowtex™ UP from Nissan Chemical Industries (Tokyo, Japan) is 20-21 wt.% of acicular silica, less than 0.35% (w/w) of Na₂O, and water. The particles are about 9 to 15 nanometers in diameter and have lengths of 40 to 100 nanometers. The suspension has a viscosity of <100 mPas at 25°C, a pH of about 9 to 10.5, and a specific gravity of about 1.13 at 20°C.

Snowtex™ OUP from Nissan Chemical Industries (Tokyo, Japan) is 15-16 wt. % of acicular silica, less than 0.03% (w/w) of Na₂O, and water. The particles are about 9 to 15 nanometers in diameter and have lengths of 40 to 100 nanometers. The suspension has a viscosity of <20 mPas at 25°C, a pH of about 2-4, and a specific gravity of about 1.08-1.11 at 20°C.

Spherical silica nanoparticle dispersions are available from the Nalco Company, Naperville, IL as Nalco 1115™ (4nm), 2326™ (5nm), 1030™ (13 nm), and 1050™. Tetraethoxysilane (TEOS, 99.9%) was obtained from Alfa Aesar, Ward Hill, MA. Polyethylene terephthalate (PET) film was obtained from E.I DuPont de Nemours, Wilmington, DE under the trade designation "Melinex 618", and having a thickness of 5.0 mils and a primed surface.

Polycarbonate (PC) film is available under the tradenames LEXAN 8010 (0.381-mm), 8010SHC (1.0-mm) and OQ92 from GE Advanced Materials Specialty Film and Sheet, Pittsfield, MA)

Bynel-3101™ is a polyethylene copolymer commercially available from E. I. DuPont de Nemours & Co., Wilmington, Del.
Pellathene™ 2363 is polyether-based polyurethane, available from Dow Chemical, Midland MI.

Polyvinyl chloride (PVC) film was 3M(TM) Scotchcal™ Luster Overlaminate 8519, 1.25 mil, available from the 3M Company, St. Paul, MN.
PFPE on PC (Example 44) refers to a polycarbonate substrate having a perfluoropolyether coating thereon, prepared according to Example 1 of 11/828566 (Klun et al, incorporated herein by reference), using as the top coating a solution of SHC-1200 containing 0.5 weight percent of Preparation 2.

DS-10 - Sodium dodecylbenzene sulfonate available from Aldrich Chemical; Milwaukee, Wis.

3M 906™ Hardcoat is a 33 wt% solids ceramer hardcoat dispersion containing 32 wt% 20nm SiO₂ particles, 8 wt% N,N-dimethylacrylamid, 8 wt% methacryloxypropyl trimethoxysilane and 52 wt% pentaerythritol tri/tetra acrylate (PETA) in IPA), and is available from the 3M Company. Reference may be made to column 10, line 25-39 and Example 1 of U.S. Patent No. 5,677,050 to Bilkadi, et al.

### Transmissivity

Transmission and reflectance measurements were performed using a Varian Cary 5E spectrophotometer at a relative humidity of 20%. Atomic Force Microscopy (AFM) heights and phase images were collected using Nanoscope IIIa, Dimension 5000 AFM microscope (Digital Instruments, Santa Barbara) ranging from 500nm to 5um. Multiple-angle spectroscopic ellipsometry (M2000) measurements were made on coatings on either PET or glass. Measurements were performed from 300 to 900nm at an angle of incidence of 70°. Film thicknesses were determined over this range, and refractive index values were determined at 555nm.

### Contact angle measurement

Advancing, receding and static water contact angle measurements were made on the dried coated samples using as-received deionized water filtered through a filtration system obtained from Millipore Corporation (Billerica, MA), on a video contact angle analyzer available as product number VCA-2500XE from AST Products (Billerica, MA). Reported values are the averages of measurements on at least three drops measured on the right and the left sides of the drops, and are shown in Table. Drop volumes were 1 µL for static measurements.

### Antifogging test

Antifogging properties were evaluated by the immediate appearance change of the coating side facing the blowing air from the alcohol-free evaluator's breath. Antifogging performance was ranked as follows:
5 = Excellent
4 = Good
3 = poor

### Durability test

The mechanical durability was evaluated by forcibly wiping the coated surface with a dry and a wet Kimwipe™ tissue as indicated in the Examples. The number reported in the Tables refers to the number of wipes required to visibly remove the coating, as judged by light transmission; i.e. the coating scratched after "x" number of rubs with a dry Kimwipe, and "y" number of rubs with wet Kimwipe and is reported in the table as "x/y.

### Easy cleaning test

A drop of dirty diesel oil, or of vegetable oil, was applied on the coating surfaces for a period of time (2min to overnight). Subsequently, the contaminated areas were subjected to water rinsing until the dirty oil or vegetable oil was visibly completely removed. Time consumed was recorded when the applied flow rate was set at 750mL/min. The water rinse time is recorded. Then 4-5 cleaning cycles were repeated. The cleanability was evaluated by the cleaning speed (the time) and whether any residual oil remained on the surfaces. The mechanical durability for easy cleaning was evaluated by rubbing the coating surfaces with wet and/or dry Kimwipe™ tissue.

### Coatability

Dispersions that provided a visually uniform coating are designated "coatable". Coatings that beaded up and/or provided a visually non-uniform coating were designated "beading".

### Sample preparation - general:

Acicular silica particle dispersions were diluted to 5wt% (unless otherwise noted) with deionized water and acidified with concentrated aqueous HCl to the indicated pH (generally 2-3). For some Examples, the acidified acicular silica particle dispersions (5wt%) were further combined with TEOS, spherical silica nanoparticles or organic solvents in ratios described in the Tables.

The indicated substrates were coated using a blocked coater or a Meyer bar with a 1 mil gap and 5wt% silica dispersions (total silica weight). The coated samples were heated to 80-100°C for 5min to 10min to effect drying, providing a dry coating thickness in a range of 100-200 nm.

### Examples 1 to 13 and Comparative Example 1.

In the following Comparative Example and Examples 1-13, an untreated polyethylene terephthalate (PET) substrate was coated with the indicated 1wt.% acicular silica particle compositions at a pH of 2-3 and at a coating thickness of 1 mil (∼25 micrometers) and dried at 80-100°C for 5-10 minutes. For Examples having both acicular and spherical silica particles, the coating composition was 1 wt.% of the combined particles. The coated samples were tested for transmissivity, antifogging and contact angle using the previously described test methods. Antifogging performance was measured after one week exposure to ambient conditions. The results are shown in Table 1. For comparative purposes, an uncoated PET sample was also tested.

**Table 1**

| Example | SiO₂ dispersion (wt. ratio) | Transmissivity (Average 400-700 nm) % | Antifogging performance | Static CA | Advancing CA | Receding CA |
|---|---|---|---|---|---|---|
| C1 | PET | 86.2 | No | 66.9 | 69.4 | 57.5 |
| 1 | Snowtex-OUP | 90.4 | 5 | 4.5 | 8.9 | 8.4 |
| C2 | Nalco 1115 (4 nm) | 89.9 | 4 | 14.8 | 12.7 | 8.6 |
| C3 | Nalco 2326 (5 nm) | 90.1 | 4 | 3.5 | 5.4 | 5.5 |
| C4 | Nalco 1050 (20 nm) | 89.9 | 4 | 3.2 | 5.7 | 5.8 |
| 5 | Snowtex-OUP/4 nm 9/1 | 91.5 | 5 | 7.8 | 8.3 | 8.9 |
| 6 | Snowtex-OUP/4 nm 7/3 | 89.1 | 5 | 7.6 | 7.2 | 5.8 |
| 7 | Snowtex-OUP/4 nm 1/1 | 90.8 | 5 | 6.7 | 6.2 | 8.0 |
| 8 | Snowtex-OUP/5nm 9/1 | 91.1 | 5 | 5.6 | 9.6 | 9.6 |
| 9 | Snowtex-OUP /5 nm 7/3 | 90.3 | 5 | 4.9 | 6.6 | 8.9 |
| 10 | Snowtex-OUP /5 nm 5/5 | 90.1 | 5 | 4.4 | 5.5 | 6.6 |
| 11 | Snowtex-OUP/20 nm 9/1 | 91.2 | 5 | 4.5 | 5.4 | 7.0 |
| 12 | Snowtex-OUP/20 nm 7/3 | 91.5 | 5 | 4.6 | 5.2 | 5.5 |
| 13 | Snowtex-OUP/20 nm 5/5 | 91.4 | 5 | 5.3 | 6.1 | 6.2 |

The results of Table 1 demonstrate that coatings resulting from acicular silica particle coatings show generally better transmissivity, antifogging and contact angle properties than that of the coatings obtained from spherical nanoparticles.

### Examples 14-15 and Comparative Examples C5-C7

In the following Example and Comparative Examples, an untreated polyethylene terephthalate (PET) substrate was coated with the indicated 5 wt.% acicular silica particle compositions at the indicated pH values and at a coating thickness of 1 mil (∼25 micrometers) and dried at 80-120°C for 5-10 minutes. The coated samples were tested for durability (wet and dry rub), coatability and contact angle using the previously described test methods. The results are shown in Table 2. Digital micrographs (TEM) at 100,000X of Comparative Example C5 and Example 14 are shown as Figs. 1 and 2, respectively. As can be seen, Figure 1 shows agglomeration of the silica particles, while Figure 2 shows a much more uniform coating with a much greater degree of bonding between particles.

**Table 2**

| Example | SiO₂ disposion (pH) | Contact angle | Receding angle | Dry rub | Wet rub | Coatability |
|---|---|---|---|---|---|---|
| C5 | Snowtex-UP (∼10) | 75.8 | 58.1 | 5 | n/a | bearding |
| 14 | Snowtex-UP (2) | 79.2 | 16.5 | 5 | <10 | coatable |
| 15 | Snowtex-UP (3) | 77.9 | 19.6 | 5 | <10 | coatable |
| C6 | Snowtex-UP (6) | 76.9 | 25.5 | 5 | <10 | Beading |
| C7 | Snowtex-UP (7) | 79.1 | 49.5 | 5 | <10 | Beading |

The results of Table 2 indicate dispersion having a pH below 5 provided more uniform coatings, whereas higher pH dispersion beaded up or were not coatable.

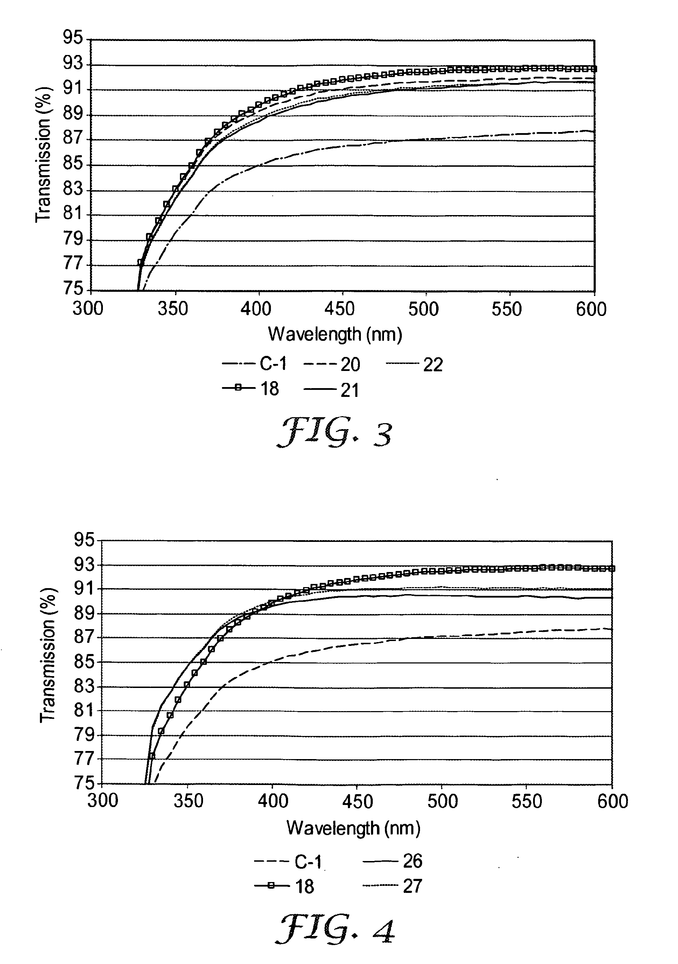

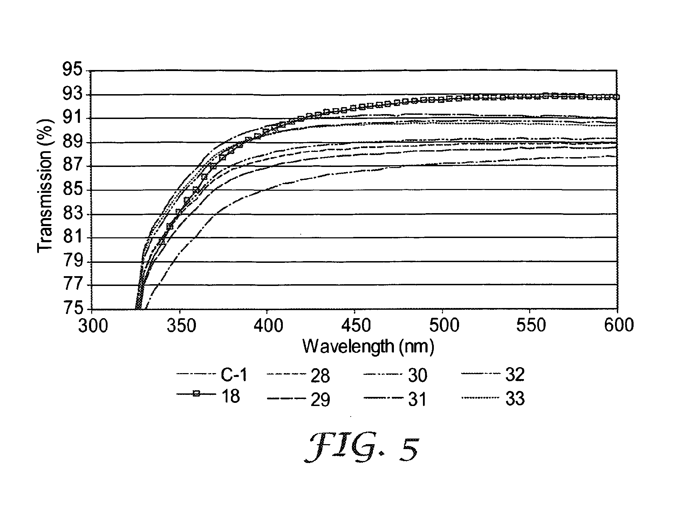

In the following Examples 18-33, an untreated polyethylene terephthalate (PET) substrate was coated (single side) with the indicated 5 wt.% acicular silica particle compositions at a pH of 2-3 and at a coating thickness of 1 mil (∼25 micrometers) and dried at 80-100C for 5-10 minutes. Some of the Example also contained TEOS and/or spherical silica nanoparticles in the indicated proportions. The coated samples were tested for increase in transmissivity (relative to an uncoated PET substrate), coating quality, antifogging performance and contact angle using the previously described test methods. The results are shown in Table 3. The transmittivity data for Comparative Example 1, and Examples 18 and 20-22 is shown in Figure 3. The transmittivity data for Comparative Example 1, and Examples 18, 26 and 27 is shown in Figure 4. The transmittivity data for Comparative Example 1, and Examples 18 and 28-33 is shown in Figure 5.

**Table 3**

| Example | SiO₂ dispersion | Durability Test (x/y) | Static water contact Angle | Transmission (550nm) | Antifogging Performance |
|---|---|---|---|---|---|
| 18 | 5wt% Snowtex-UP | 15/20 | 8.5 | 92.75 | 5 |
| 19 | 5wt% Snowtcx- UP /TEOS 95:5 | 30/40 | 8.2 | | 5 |
| 20 | 5wt% Snowtex-UP/TEOS 90:10 | 30/40 | 10.1 | 91.95 | 5 |
| 21 | 5wt% Snowtex-UP/TEOS 80:20 | 35/50 | 10.3 | 91.27 | 5 |
| 22 | 5wt% Snowtex-UP/TEOS 70:30 | 45/65 | 10.3 | 91.60 | 5 |
| 23 | 5wt% Snowtex-UP/TEOS 50:50 | 45/55 | 15.6 | Not measured | 4 |
| 24 | 5wt% Snowtex-OUP/TEOS 90:10 | 24/28 | 9.6 | Not measured | 5 |
| 25 | 5wt% Snowtex-OUP/ TEOS 70:30 | 35/45 | 11.6 | Not measured | 5 |
| 26 | Snowtex-UP/5 nm 50:50 | 28/65 | 4.5 | 90.51 | 5 |
| 27 | Snowtex-up/4 nm 50:50 | 43/65 | 11.4 | 90.89 | 5 |
| 28 | Snowtex-UP/5nm/ TEOS 45:45:10 | Not measured | 11.2 | 88.84 | 5 |
| 29 | Snowtex-UP/5nm/ TEOS 40:40:20 | Not measured | 12.2 | 88.45 | 5 |
| 30 | Snowtex-UP/5nm/ TEOS 35:35:30 | 46/62 | 13.2 | 89.26 | 5 |
| 31 | Snowtex-UP/4 nm/ TEOS 45:45:10 | Not measured | Not measured | 91.14 | 5 |
| 32 | Snowtex-UP/4 nm/TEOS 40:40:20 | Not measured | Not measured | 90.70 | 5 |
| 33 | Snowtex-UP/4 nm/TEOS 35:35:30 | | Not measured | 90.84 | 4 |

The results of Table 3 indicate that the coatings obtained from acicular silica particles combined with siloxane oligomers and/or spherical silica nanoparticles show hydrophilic, antireflection and antifogging properties.

In the following Example 34 and Comparative Example C8, an untreated polyethylene terephthalate (PET) substrate was coated (single side) with the indicated 5 wt.% acicular silica particle compositions at the indicated pH and at a coating thickness of 1 mil (∼25 micrometers) and dried at 80-100C for 5-10 minutes. The coating composition was a 79:21 weight ratio of isopropanol/water. The coated samples were tested for increase in transmissivity (relative to an uncoated PET substrate), dispersion stability, antifogging performance and contact angle using the previously described test methods. The results are shown in Table 4.

**Table 4**

| | SiO₂ dispersion | pH | acid | Dispersion stability | Coating Quality | Increased Transmission (%) | Antifogging performance |
|---|---|---|---|---|---|---|---|
| C8 | 5wt% Snowtex-UP | 10 | none | precipitate | Not coatable | | Not measured |
| 34 | 5wt% Snowtex-UP | 2 | HCl | stable | coatable | 3.8 | 5 |

The results of Table 4 indicate that Snowtex-UP is not stable when alcohols such as IPA is used as a solvent, but becomes stable when the solution pH is adjusted with either organic acids or inorganic acids.

In the following Examples 36-39 and Comparative Examples C9-C11, an untreated polyethylene tcrcphthalatc (PET) substrate was coated (single side) with the indicated 5 wt.% acicular silica particle compositions at the indicated pH and at a coating thickness of 1 mil (∼25 micrometers) and dried at 80-100C for 5-10 minutes. An uncoated PET substrate was tested as a control. Some of the coating composition further contained a surfactant DS-10. The coated samples were tested for cleanability to vegetable oil and dirty diesel oil using the previously described test methods. The results are shown in Table 5.

**Table 5**

| Example | SiO₂ dispersion | pH | Easy removal of vegetable oil | Easy removal of dirty diesel oil | Water rinse time with 750mL/min |
|---|---|---|---|---|---|
| C9 | uncoated PET | n/a | remained | remained | |
| 36 | Snowtex-UP | 2-3 | Completely removed | | 8 sec. |
| 37 | Snowtex-UP | 2-3 | | trace amount* remained | 20sec |
| C10 | Snowtex-up/DS-10 98:2 | 10 | Completely removed | | 8 sec. |
| C11 | Snowtex-up/DS-10 98:2 | 10 | | trace amount* remained | 20sec |
| 38 | Snowtex-up/DS-10 98:2 | 2 | Completely removed | | 8 sec. |
| 39 | Snowtex-up/DS-10 98:2 | 2 | | trace amount* remained | 20sec |

| | | | | | |
|---|---|---|---|---|---|
| * The residue of dirty diesel oil was easily removed by wet paper towel, in contrast, a dry paper towel smeared the stain. | | | | | |

The results of Table 5 indicate that highly hydrophilic surfaces obtained from acicular silica particles showed rinse-away cleaning. Examples C10 and C 11 demonstrated that non-acidified particles were coatable with the assistance of surfactants, but the coatings are not as durable as the ones with acid treatment.

In the following Examples 40-44 and Comparative Example C 12, various substrates were coated (single side) with the indicated 5 wt.% acicular silica particle compositions at the indicated pH and at a coating thickness of 1 mil (∼25 micrometers) and dried at 80-100C for 5-10 minutes. An uncoated PET substrate coated with a coating solution at pH 10 was tested as a control. The coated samples were tested for advancing and receding contact angles, shelf life and coatability using the previously described test methods. The stability was determined by allowing the dispersion to sit for a period of a month. Those that had no visual separation after a month were considered stable. The results are shown in Table 6. As can be seen, Figure 1 shows agglomeration of the silica particles, while Figure 2 shows a much more uniform coating.

**Table 6**

| Example | SiO₂ dispersion | pH | substrate | Contact angle Adv/Rec | Stability of dispersion | coatability |
|---|---|---|---|---|---|---|
| C12 | Snowtex-UP | 10.5 | PET | 77.1/61.5 | Stable | Beads |
| 40 | Snowtex-UP | 2.0 | PET | 79.2/16.5 | Stable | coatable |
| 41 | Snowtex-UP | 2-3 | Polycarbonate | 88.1/31.1 | Stable | coatable |
| 42 | Snowtex-UP | 2-3 | PU, Pellathane | 104.8/24.2 | Stable | coatable |
| 43 | Snowtex-UP | 2-3 | PVC, | 70.2/16.4 | Stable | coatable |
| 44 | Snowtex-UP | 2-3 | Perfluoropolyether hardcoat on PC | 109.2/18.9 | Stable | coatable |
| 44 | Snowtex-UP | 2-3 | Bynel | 80.2/22.2 | Stable | coatable |

The results of Table 6 indicate that the acidified acicular silica particle dispersions showed low receding angles on various hydrophobic substrates and were coatable on these substrates

### Examples 45-53

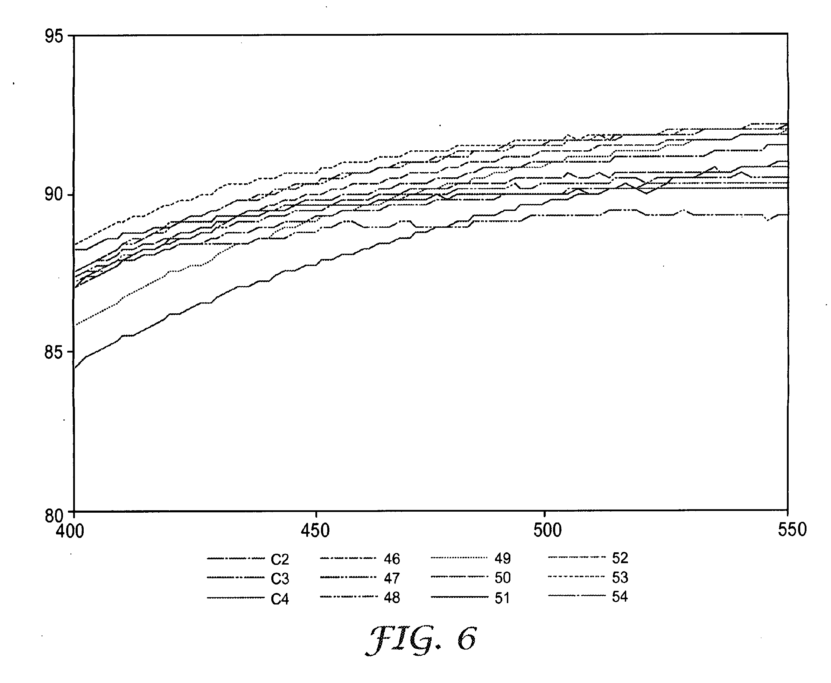

In Examples 45-53 Snowtex-OUP (diameter∼15 nm, length ∼40 nm), NALCO 1115 (4 nm spherical silica nanoparticle), NALCO 2326 (5 nm spherical silica nanoparticle), and NALCO 1050 (20 nm spherical silica nanoparticle) were diluted to 1.0 wt% using DI water. The suspensions pH values were adjusted to 2.0 with conc. HCl. Spherical nanoparticle suspensions 1115, 2326 or 1050 were mixed with Snowtex-OUP at the indicated ratios. The mixed suspensions were then bar coated on an untreated PET substrates at 1 mil gap. Samples were dried at 110°C for 5 minutes. Their coating static, advancing, and receding contact angles were measured. The average (of three spots) contact angles were shown in Table 1. Transmittance spectra are shown in Figure 6

### Example 54 and Comparative Examples C13-C16

In the following Example and Comparative Examples, Snowtex-OUP (High aspect ratio silica nanoparticle; NALCO 2326 (30 wt%, 5 nm diameter); NALCO 1034A (34%, 20 nm diameter), and NALCO 2329 (40.%, 75 nm) were diluted with a mixture solvent of IPA and diluted HCl (pH: 2.5) (1:1 by weight) to 1.0 wt%. Poly(vinyl alcohol) (Mw: 78k, 98% mole hydrolyzed) was dissolved in DI water at 80 °C to make a stock solution of 1.0 wt%. TEOS was diluted with IPA to 1.0 wt%. To a solution of 1.0 wt% Snowtex-OUP, NALCO 2326 (1.0 wt%) and NALCO 1034A (1.0 wt%) were added the 1.0 wt% TEOS, and 1.0 wt% PVA stock solutions respectively so the composition of SiO2/PVA/TEOS was 90:5:5 by weight.

The solutions were then coated on a PET substrate (pre-cleaned with IPA) using a Meyer rod #3. The films were heated in a 120 °C air oven for 5 min. A piece of black tape (Yamato Co. Japan) was then laminated on the back of the samples to eliminate the reflection from back side. Reflection spectra from the front side of the four samples were measured at wavelength ranged from 400 to 700 nm and collected from a Perkin Elmer Lambda 950 Spectrometer. Minimum reflectance at specific wavelength was thus obtained shown in Table 7. Average reflection percentage between 400-700 nm was calculated by adding all reflectance at every tested wavelength and then divided by the number of data points. The reflectance of blank PET (C16) was also measured using the same method. It has an average reflection of 5.31%. Snowtex-OUP shows an average reflection of 1.28%. Comparing to that of blank PET, the reflection reduction is calculated to be 76% [(5.3-1.28)/5.3]reduction of about 76%, while NALCO 2326, NALCO 1034A, and NALCO 2329 show average reflection of 2.61%, 2.31%, and 1.94% respectively. Comparing to blank PET, they show modest reduction of reflection of∼50 to 60%.

**Table 7**

| Example | SiO₂ dispersion | Minimum Reflection % | Wavelength at minimum (nm) | Average Reflection % Between 400-700 nm | Reduction of Reflection |
|---|---|---|---|---|---|
| 55 | Snowtex_OUP | 1.09 | 545 | 1.28 | 76% |
| C13 | NALCO 2326 (5 nm) | 2.34 | 505 | 2.61 | 51 |
| C14 | NALCO 1034A (20 nm) | 2.13 | 520 | 2.31 | 56 |
| C15 | NALCO 2329 (75 nm) | 1.77 | 525 | 1.94 | 63 |
| C16 | none | n/a | | 5.31 | n/a |

The results of Table 7 demonstrate that when the minimum is the desired 550 nm, the instant coating compositions show the maximum reflection reduction of about 76%, while NALCO 2326, NALCO 1034A, and NALCO 2329 show modest reduction of 50 ∼ 60%. C16 has an average reflection of 5.31%. Snowtex-OUP shows an average reflection of 1.28%. Comparing to that of blank PET, the reflection reduction is calculated to be 76% [(5.3-1.28)/5.3]reduction of about 76%, while NALCO 2326, NALCO 1034A, and NALCO 2329 show average reflection of 2.61 %, 2.31%, and 1.94% respectively.

### Examples 56-57 and Comparative Example C17

In the following Examples and Comparative Example the transmissivity of the coatings were evaluated. The acicular silica particle dispersion comprising Snowtex OUP, poly(vinyl alcohol) and TEOS (SiO2/PVA/TEOS 90/5/5 or Snowtex OUP, poly(vinyl alcohol) and 3-glycidoxypropyl trimethoxysilane (SiO₂/PVA/epoxysilane 85/10/5 by weight, solid content: 1.0 wt%) was acidified with HCl aqueous to pH=2 and then coated on a piece of 2 mil PET substrate with a 3M 906™ hardcoat using a Meyer rod #4 on one side and on both sides. Transmittance spectra were collected for the substrate and the samples. For comparative purposes, a PET substrate with only 3M 906 hardcoat was also tested.

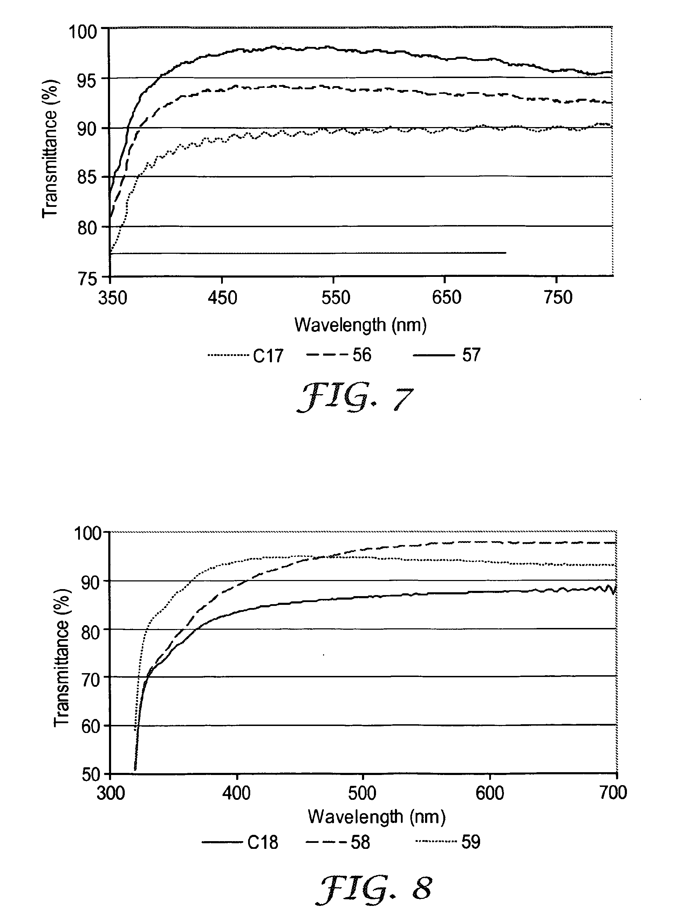

The data of Figure 7 shows that the coatings (SiO₂/PVA/TEOS) improved transmission at 400-700 nm compared with control sample of hardcoated PET substrate. As can be seen, average transmittance (400 - 700 nm) increases from 88.2% of the substrate to 93.7% with one side coated and to 97.5% with both sides coated. Further, coatings resulting from Snowtex-OUP combined with PVA binder and crosslinker TEOS demonstrate improved transmission at a broad wavelength scale.

### Examples 58-59and Comparative Example C18

The antireflective (AR) properties of Snowtex-OUP (Example 58) and Snowtex-UP (Example 59) were also compared. These two suspensions were diluted to 1.0 % with DI water and then adjusted to pH = 2.0 using HCl aqueous then coated on both sides of an untreated PET substrate. Transmittance spectra are shown in Figure 8.

The results of Fig 8 demonstrate that coating both sides of a substrate improves the transmissivity. Transmissivity of the PET substrate is 86.8%. It increases to 96.1 % for OUP double sides coated and 94.1 % for UP double sides coated.

In the following Examples 60-63, a corona treated polyethylene terephthalate (PET) substrate was coated (single side) with the coating compositions containing 5 wt.% acicular silica particle compositions at pH = 2 with indicated surface modifying agents 1-3 in silica: surface modifying agent ratios of 9:1 The surface modifying agents were:
1: N-trimethoxysilylpropyl-N,N,N-trimethylammonium chloride
2: Carboxyethylsilanetriol sodium salt
3: (HO)₃Si(CH₂)₃OCH₂CH(OH)CH₂SO₃H - prepared according to the synthetic procedure described in U.S. 4,338,377 and U.S. 4,152,165.

The PET substrate was coated at a coating thickness of 1 mil (∼25 micrometers) and dried at 100-120C for 5-10 minutes. The coated samples were tested for antifogging and water contact angles using the previously described test methods. The results are shown in Table 8.

**Table 8**

| Example | SiO₂ dispersion | Surface Modifying Agent (Ratio) | Static Water Contact angle (°) | Antifogging performance |
|---|---|---|---|---|
| 60 | Snowtex-UP | None | 14.3 | 5 |
| | Snowtex-UP | 1 | 8.6 | 5 |
| 61 | | (1:9) | | |
| 62 | Snowtex-UP | 2 | 9.2 | 5 |
| | | (1:9) | | |
| 63 | Snowtex-UP | 3 | 13.5 | 5 |
| | | (1:9) | | |

## Claims

1. A method of providing a coating to a substrate comprising:
coating a substrate with a coating composition having a pH of less than 3 comprising:
a) an aqueous dispersion having a pH of less than 5 of acicular silica particles, and
b) an acid having.a pKa of < 5;
and drying to provide a silica particle coating, wherein the coating composition does not contain non-aqueous solvents.

2. The method of claim 1 wherein the silica particles have an average particle diameter of 9-25 nm and an average particle length of 40-500 nm.

3. The method of claim 1 wherein the coating composition comprise a mixture of acicular silica particles and spherical silica nanoparticles.

4. The method of claim 3 wherein the spherical nanoparticles have an average particle diameter of 100 nanometers or less.

5. The method of claim 1 wherein the concentration of said acicular silica particles is 0.1 to 20 wt.% of the coating composition.

6. The method of claim 1 wherein the coating composition further comprises a tetraalkoxysilane.

7. The method of claim 1 wherein the coating composition further comprises up to 50 wt.% of a polymeric binder, relative to the amount of acicular silica particles.

8. The method of claim 1 wherein the coating composition comprises
a) 0.5 to 99 wt.% water
b) 0.1 to 20 wt.% acicular silica particles;
c) a sufficient amount of an acid having a pKa of < 5 to reduce the pH to less than 3;
d) 0 to 20 percent by weight of a tetraalkoxysilane, relative to the amount of the silica nanoparticle
e) 0 to 50 percent by weight of a polymeric binder.

9. A coating composition having a pH of less than 3 which does not contain non-aqueous solvents comprising:
a) 0.5 to 99 wt.% water,
b) 0.1 to 20 wt.% acicular silica particles ;
c) 0 to 20 wt.% spherical silica nanoparticles having an average particle diameter of 100 nm or less, wherein the sum of b) and c) is 0.1 to 20 wt.%;
d) a sufficient amount of an acid having a pKa of < 5 to reduce the pH to less than 3;
e) 0 to 20 percent by weight of a tetraalkoxysilane, relative to the amount of the acicular silica particles
f) 0 to 50 percent by weight of a polymeric binder, relative to the amount of acicular silica particles.

10. A coated article comprising a substrate and a coating thereon, wherein the coating is derived from a coating composition as defined in claim 9.

11. The method of claim 1 wherein the coating composition contains 0 percent by wei of a polymeric binder.

12. The method of claim 1 wherein the acicular silica nanoparticles are not surface modified.

## Patentansprüche

1. Verfahren zum Versehen eines Substrats mit einer Beschichtung, bei dem man:
ein Substrat mit einer Beschichtungszusammensetzung mit einem pH-Wert von weniger als 3, umfassend
a) eine einen pH-Wert von weniger als 5 aufweisende wässrige Dispersion von nadelförmigen Siliciumdioxidteilchen und
b) eine Säure mit einem pKa-Wert < 5,
beschichtet
und zur Bereitstellung einer Siliciumdioxidteilchen-Beschichtung trocknet, wobei die Beschichtungszusammensetzung keine nichtwässrigen Lösungsmittel enthält.

2. Verfahren nach Anspruch 1, bei dem die Siliciumdioxidteilchen einen mittleren Teilchendurchmesser von 9-25 nm und eine mittlere Teilchenlänge eine von 40-500 nm aufweisen.

3. Verfahren nach Anspruch 1, bei dem die Beschichtungszusammensetzung eine Mischung von nadelförmigen Siliciumdioxidteilchen und kugelförmigen Siliciumdioxidnanoteilchen umfasst.

4. Verfahren nach Anspruch 3, bei dem die kugelförmigen Nanoteilchen einen mittleren Teilchendurchmesser von 100 nm oder weniger aufweisen.

5. Verfahren nach Anspruch 1, bei dem die Konzentration der nadelförmigen Siliciumdioxidteilchen 0,1 bis 20 Gew.-% der Beschichtungszusammensetzung beträgt.

6. Verfahren nach Anspruch 1, bei dem die Beschichtungszusammensetzung ferner ein Tetraalkoxysilan umfasst.

7. Verfahren nach Anspruch 1, bei dem die Beschichtungszusammensetzung ferner bis zu 50 Gew.-% eines polymeren Bindemittels, bezogen auf die Menge von nadelförmigen Siliciumdioxidteilchen, umfasst.

8. Verfahren nach Anspruch 1, bei dem die Beschichtungszusammensetzung
a) 0,5 bis 99 Gew.-% Wasser;
b) 0,1 bis 20 Gew.-% nadelförmige Siliciumdioxidteilchen;
c) eine zur Verringerung des pH-Werts auf weniger als 3 ausreichende Menge einer Säure mit einem pKa-Wert < 5;
d) 0 bis 20 Gewichtsprozent eines Tetraalkoxysilans, bezogen auf die Menge der Siliciumdioxidnanoteilchen,
e) 0 bis 50 Gewichtsprozent eines polymeren Bindemittels umfasst.

9. Beschichtungszusammensetzung mit einem pH-Wert von weniger als 3, die keine nichtwässrigen Lösungsmittel enthält, umfassend
a) 0,5 bis 99 Gew.-% Wasser;
b) 0,1 bis 20 Gew.-% nadelförmige Siliciumdioxidteilchen;
c) 0 bis 20 Gew.-% kugelförmige Siliciumdioxidnanoteilchen mit einem mittleren Teilchendurchmesser von 100 nm oder weniger, wobei sich die Summe von b) und c) auf 0,1 bis 20 Gew.-% beläuft;
d) eine zur Verringerung des pH-Werts auf weniger als 3 ausreichende Menge einer Säure mit einem pKa-Wert < 5;
e) 0 bis 20 Gewichtsprozent eines Tetraalkoxysilans, bezogen auf die Menge der nadelförmigen Siliciumdioxidteilchen;
f) 0 bis 50 Gewichtsprozent eines polymeren Bindemittels, bezogen auf die Menge nadelförmiges Siliciumdioxidteilchen.

10. Beschichteter Gegenstand, umfassend ein Substrat und eine Beschichtung darauf, wobei sich die Beschichtung von einer Beschichtungszusammensetzung gemäß Anspruch 9 ableitet.

11. Verfahren nach Anspruch 1, bei dem die Beschichtungszusammensetzung 0 Gewichtsprozent eines polymeren Bindemittels enthält.

12. Verfahren nach Anspruch 1, bei dem die nadelförmigen Siliciumdioxidnanoteilchen nicht oberflächenmodifiziert sind.

## Revendications

1. Procédé de formation d'un revêtement sur un substrat, comprenant :
le revêtement d'un substrat avec une composition de revêtement ayant un pH inférieur à 3, comprenant :
a) une dispersion aqueuse de particules de silice aciculaire ayant un pH inférieur à 5, et
b) un acide ayant une valeur pKa inférieure à 5 ;
et un séchage pour former un revêtement de particules de silice, la composition de revêtement ne contenant pas de solvants non aqueux.

2. Procédé selon la revendication 1, dans lequel les particules de silice ont un diamètre moyen de particule de 9 nm à 25 nm et une longueur moyenne de particule de 40 nm à 500 nm.

3. Procédé selon la revendication 1, dans lequel la composition de revêtement comprend un mélange de particules de silice aciculaire et de nanoparticules sphériques de silice.

4. Procédé selon la revendication 3, dans lequel les nanoparticules sphériques ont un diamètre moyen de particule de 100 nanomètres ou moins.

5. Procédé selon la revendication 1, dans lequel la concentration desdites particules de silice aciculaire est de 0,1 % à 20 % en poids de la composition de revêtement.

6. Procédé selon la revendication 1, dans lequel la composition de revêtement comprend en outre un tétraalcoxysilane.

7. Procédé selon la revendication 1, dans lequel la composition de revêtement comprend en outre jusqu'à 50 % en poids d'un liant polymère, relativement à la quantité de particules de silice aciculaire.

8. Procédé selon la revendication 1, dans lequel la composition de revêtement comprend :
a) 0,5 % à 99 % en poids d'eau ;
b) 0,1 % à 20 % en poids de particules de silice aciculaire ;
c) une quantité suffisante d'un acide ayant une valeur pKa inférieure à 5 pour réduire le pH jusqu'à moins de 3 ;
d) 0 à 20 % en poids d'un tétraalcoxysilane, relativement à la quantité de particules de silice aciculaire ; et
e) 0 à 50 % en poids d'un liant polymère.

9. Composition de revêtement ayant un pH inférieur à 3, laquelle ne contient pas de solvants non aqueux, comprenant :
a) 0,5 % à 99 % en poids d'eau ;
b) 0,1 % à 20 % en poids de particules de silice aciculaire ;
c) 0 à 20 % en poids de nanoparticules sphériques de silice ayant un diamètre moyen de particule de 100 nm ou moins, la somme de b) et c) représentant 0,1 % à 20 % en poids ;
d) une quantité suffisante d'un acide ayant une valeur pKa inférieure à 5 pour réduire le pH jusqu'à moins de 3 ;
e) 0 à 20 % en poids d'un tétraalcoxysilane, relativement à la quantité de particules de silice aciculaire ; et
f) 0 à 50 % en poids d'un liant polymère, relativement à la quantité de particules de silice aciculaire.

10. Article revêtu comprenant un substrat et un revêtement sur ledit substrat, dans lequel le revêtement est formé à partir d'une composition de revêtement telle que définie dans la revendication 9.

11. Procédé selon la revendication 1, dans lequel la composition de revêtement contient 0 % en poids d'un liant polymère.

12. Procédé selon la revendication 1, dans lequel les nanoparticules de silice aciculaire ne sont pas modifiées en surface.
